# EUROPÄISCHE PATENTSCHRIFT

(11) **EP 0 400 174 B1**
(45) Veröffentlichungstag und Bekanntmachung des Hinweises auf die Patenterteilung: **30.08.1995**
(21) Anmeldenummer: 89109833.7
(22) Anmeldetag: 31.05.1989
(51) Int. Cl.: G06F 13/12, G06F 13/40

(54) **Adaptereinrichtung zum störungsfreien Anschluss von peripheren Rechnereinrichtungen an eine von Rechnersystemen gesteuerte Peripherieschnittstelle**
Adapter for the interference-free connection of peripheral computer devices to a peripheral interface controlled by a computer system
Adaptateur pour la connexion antiparasitaire d'appareils ordinateurs périphériques avec un interface périphérique commandé par un systéme ordinateur

(43) Veröffentlichungstag der Anmeldung: 05.12.1990
(73) Patentinhaber: SIEMENS AKTIENGESELLSCHAFT, 80333 München (DE)
(72) Erfinder: Anger, Horst, D-8027 Neuried (DE); Hopfes, Anton, Dipl.-Ing. (FH), D-8018 Schamach (DE); Marquart, Rainer, Dipl.-Ing., D-8192 Geretsried (DE)

(56) Entgegenhaltungen:
- EP-A- 0 241 905
- IBM TECHNICAL DISCLOSURE BULLETIN, Band 31, Nr. 4, September 1988, Seiten 293-296, New York, US; "Dual-bus interface for small computer system interface controllers"
- ELEKTRONIK, Band 38, Nr. 9, 28. April 1989, Seiten 64-66; A.M. DAVIDSON:""EASI" macht's einfach. Verbesserte SCSI-Schnittstelle mit neuem Interface-Chip"
- MINI-MICRO SYSTEMS, Band 17, Nr. 6, Mai 1984, Seiten 241-242,245-246, Denver,Colorado, US; R. BARBETT: "SCSI bus solves peripheral interface problems"

## Beschreibung

Periphere Rechnereinrichtungen, wie beispielsweise Diskettenlaufwerke, Festspeichereinrichtungen, Magnetplattenspeicher usw., werden üblicherweise über eine Peripherieschnittstelle an ein Rechnersystem bzw. Rechnersysteme angeschlossen. Gesteuert wird diese Peripherieschnittstelle meist von separaten Schnittstellensteuerungen, die über einen Rechnersystembus mit einer zentralen Verarbeitungseinrichtung - allgemien mit CPU bezeichnet - eines Rechnersystems und in den peripheren Einrichtungen mit jeweils deren zentraler Steuerung verbunden sind. Durch Initialisierung der zentralen Verarbeitungseinrichtung können Daten von dieser an die peripheren Rechnereinrichtungen übermittelt und z. B. gespeichert oder dort gespeicherte Daten im Sinne einer Weiterverarbeitung an die zentrale Verarbeitungseinrichtung weitergeleitet werden.

Für den Anschluß unterschiedlichster peripherer Speicher- und Ausgabeeinrichtungen an kleine Rechnersysteme wird seit geraumer Zeit eine standardisierte Peripherieschnittstelle eingesetzt; das "Small Computer System Interface", festgelegt im Dokument X3T9.2 von ANSI (American Nationals Standard Institute). An diese Peripherieschnittstelle sind mehrere periphere Rechnereinrichtungen parallel anschließbar. Die standardisierte Peripherieschnittstelle, beispielsweise in ELEKTRONIK, Bd. 38, Nr. 9, 1989, S. 64 - 66, A.M. Davidson, "'EASI' macht's einfach" beschrieben, weist 50 Anschlußpunkte auf, womit maximal 25 Schnittstellenanschlüsse, d.h. je Schnittstellenanschluß zwei Anschlußpunkte, realisierbar sind. Für die bidirektionale Übertragung von Adressen und Daten ist die Peripherieschnittstelle mit 8 Daten-Schnittstellenanschlüssen und mit einem Datenparitybit-Schnittstellenanschluß ausgestattet. Zur Steuerung der Peripherieschnittstelle sind weitere neun Steueranschlüsse vorgesehen.

Dies sind im einzelnen:
- Ein bidirektional steuerbarer "Busy"-Schnittstellenanschluß, an dem entweder von einer peripheren Rechnereinrichtung oder einem Rechnersystem angezeigt wird, daß die Peripherieschnittstelle aktiv geschaltet ist. Bei aktiv geschalteter Peripherieschnittstelle darf diese hinsichtlich Daten-oder Adressübermittlung durch keine weitere periphere Rechnereinrichtung oder ein Rechnersystem angefordert werden.
- Ein bidirektional steuerbarer "Select"-Schnittstellenanschluß, über den zusammen mit dem Anlegen von Zieladressen an den Daten-Schnittstellenanschlüssen von einem Rechnersystem oder von einer peripheren Rechnereinrichtung ein Zielrechnersystem oder eine periphere Zielrechnereinrichtung ausgewählt wird.
- Ein von den peripheren Rechnereinrichtungen zu den Rechnersystemen wirkender Daten/Steuer-Schnittstellenanschluß, an dem das aktuelle Übermitteln von Daten oder Steuerinformationen über die Daten-Schnittstellenanschlüsse angezeigt wird.
- Ein von den peripheren Rechnereinrichtungen zu den Rechnersystemen wirkender Ein-/Ausgangs-Schnittstellenanschluß, mit dem die Richtung der über die Daten-Schnittstellenanschlüsse übermittelten Daten gesteuert wird.
- Ein von den peripheren Rechnereinrichtungen zu den Rechnersystemen wirkender Nachrichten-Schnittstellenanschluß, an dem das aktuelle Übermitteln von Daten über die Daten-Schnittstellenanschlüsse angezeigt wird.
- Ein von den Rechnersystemen zu den peripheren Rechnereinrichtungen wirkender "Acknowledge"-Schnittstellenanschluß, an dem die Quittierungsinformation auf den Daten-Schnittstellenanschlüssen während eines Anforderungs-/Quittierungs-Übermittlungsbetriebes anzeigt wird.
- Ein von den peripheren Rechnereinrichtungen zu den Rechnersystemen wirkender "Request"-Anschluß, an dem die Anforderungsinformation auf den Daten-Schnittstellenanschlüssen während eines Anforderungs-/Quittierungs-Übermittlungsbetriebes angezeigt wird.
- Ein von den Rechnersystemen zu den peripheren Rechnereinrichtungen wirkender "Attention"-Schnittstellenanschluß, mit dessen Hilfe der jeweils peripheren Rechnereinrichtung angezeigt wird, daß eine Dateninformation für eine Übermittlung an diese bereitsteht.
- Ein bidirektional steuerbarer "Reset"-Schnittstellenanschluß, der den Resetzustand, d.h. einen definierten Betriebsausgangszustand entweder einer peripheren Rechnereinrichtung oder eines Rechnersystems anzeigt. In den Resetzustand wird eine Einrichtung nach Störungen, Ausfällen oder bei einer Inbetriebnahme gesteuert, um einen definierten Ausgangsbetriebszustand einzustellen.

Aus der Druckschrift IBM Technical Disclosure Bulletin, Sept. 1988, Bd. 4, S. 293 - 296, "Dual-Bus Interface for small Computer System Interface Controller" ist eine Realisierung einer Schnittstellensteuerung bekannt, bei der mit einer Steuerung zwei SCSI-Schnittstellen gesteuert werden. Die Schnittstellenanschlüsse der jeweiligen peripheren Rechnereinrichtungen oder der Rechnersysteme, die nicht an einer aktuellen Kommunikationsübermittlung mitwirken, werden von den Schnittstellensteuerungen der betreffenden peripheren Rechnereinrichtungen oder den Rechnersystemen hochohmig gesteuert. Hierdurch wird die Störanfälligkeit an der Peripherieschnittstelle verringert und der Energieverbrauch reduziert. Bei der asymmetrischen Peripherieschnittstelle können die peripheren Rechnereinrichtungen bzw. Rechnersysteme über maximal 6 Meter lange flach oder paarweise verdrillte Kabel angeschlossen werden.

An die Peripherieschnittstelle können während des Betriebs der Rechnersysteme keine weiteren peripheren Rechnereinrichtungen oder Rechnersysteme angeschlossen werden, da die durch das Anschließen verursachten Kapazitäts- und Induktivitätsänderungen an der Peripherieschnittstelle Signalstörungen und damit Datenübermittlungsstörungen hervorrufen und zur Störung bzw. zum kurzzeitigen Ausfall der Rechnersysteme führen können.

Die der Erfindung zugrunde liegende Aufgabe besteht darin, die durch die vorgegebene maximale Länge der Schnittstellenkabel begrenzte Reichweite der Peripherieschnittstelle zu vergrößern und den Anschluß von peripheren Rechnereinrichtungen an die Peripherieschnittstelle während des Betriebes der Rechnersysteme zu ermöglichen.

Die Aufgabe wird ausgehend von den Merkmalen der im Oberbegriff definierten Peripherieschnittstelle durch die kennzeichnenden Merkmale des Anspruchs 1 gelöst.

Ein wesentlicher Vorteil der Erfindung ist darin zu sehen, daß durch Einsatz der erfindungsgemäßen Adaptereinrichtung keine Änderung der physikalischen und prozeduralen Eigenschaften der bekannten Peripherieschnittstellen sowohl an den Rechnersystemen als auch an den peripheren Einrichtungen erforderlich ist.

Ein weiterer Vorteil der Erfindung ist darin zu sehen, daß die Schnittstellenanschlüsse der Peripherieschnittstelle der Adaptereinrichtung, die jeweils mit weiteren Peripherieschnittstellen von weiteren peripheren Rechnereinrichtungen, Rechnersystemen oder Adaptereinrichtungen parallel geschaltet sind, nur dann über einen Steuer-Schnittstellenanschluß aktivierbar sind, wenn an der zusätzlichen Peripherieschnittstelle der Adaptereinrichtung aktiv eine periphere Einrichtung oder ein Rechnersystem angeschaltet ist. Ist keine Einrichtung angeschlossen, so sind die Anschlüsse der Peripherieschnittstelle der Adaptereinrichtung hochohmig gesteuert, wodurch jegliche Störung dieser Peripherieschnittstelle vermieden wird.

Als Steuer-Schnittstellenanschluß an der zusätzlichen Peripherieschnittstelle ist vorteilhaft ein ursprünglicher Erdpotential-Schnittstellenanschluß vorgesehen. Wird eine periphere Rechnereinrichtung an die zusätzliche Peripherieschnittstelle angeschlossen, so wird an den Steuer-Schnittstellenanschluß durch die periphere Rechnereinrichtung Erdpotential geführt. Die periphere Rechnereinrichtung wird jedoch erst dann aktiv an die Peripherieschnittstelle gesteuert, wenn die Peripherieschnittstelle nicht belegt ist, d. h. aktuell keine Daten- oder Adreßinformationen übermittelt werden. Durch diese Maßnahme können auch während des Betriebes der Rechnersysteme periphere Rechnereinrichtungen an die Peripherieschnittstelle angeschlossen werden.

In den Ansprüchen 2 bis 4 sind besonders vorteilhafte schaltungstechnische Realisierungen der hochohmig steuerbaren Schnittstellenanschlüsse und der Schaltmittel angegeben.

Im folgenden wird die Erfindung anhand eines in mehreren Figuren dargestellten Ausführungsbeispiels näher erläutert.

Dabei zeigen:
- Fig. 1: ein Blockschaltbild eines Rechnersystems mit angeschlossenen peripheren Rechnereinrichtungen,
- Fig. 2: ein Schaltbild der Adaptereinrichtung,
- Fig. 3: ein Schaltbild der bidirektionalen Steuereinrichtung und
- Fig. 4: ein Schaltbild der Datenparitybit-Steuereinrichtung.

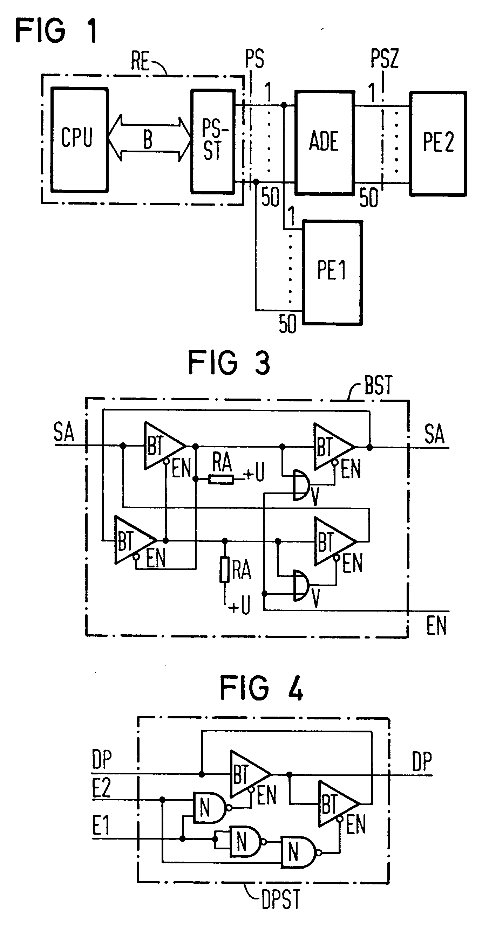

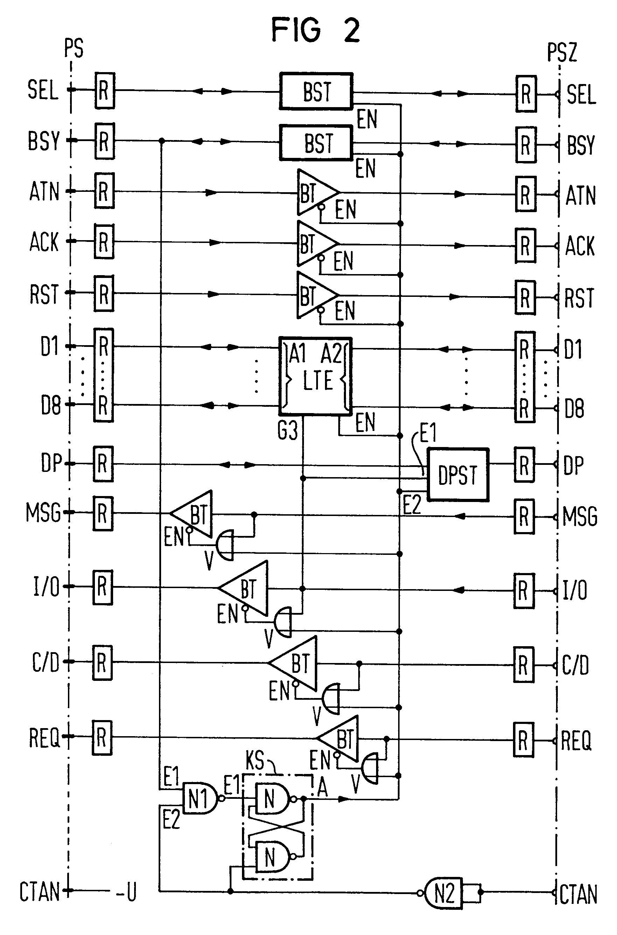

Figur 1 zeigt in einem Blockschaltbild den Anschluß von peripheren Rechnereinrichtungen PE an ein Rechnersystem RE. Das Rechnersystem RE ist durch eine zentrale Verarbeitungseinrichtung CPU und eine Peripherieschnittstellen-Steuereinrichtung PS-ST gebildet. Die beiden Einrichtungen CPU, PS-ST sind über ein internes Bussystem B miteinander verbunden. Dieses interne Bussystem B ist üblicherweise durch Adress-Daten- und Steuerleitungen gebildet. Die zentrale Verarbeitungseinrichtung CPU ist beispielsweise durch ein Mikroprozessorsystem SAB 80 286 der Firma Siemens realisiert. In der Peripherieschnittstellen-Steuereinrichtung PS-ST werden die physikalischen und prozeduralen Eigenschaften des internen Bussystems B an eine Peripherieschnittstelle PS angepaßt. Diese Peripherieschnittstelle PS ist - wie eingangs detailliert erläutert - in dem American National Standard X3T9.2 detalliert definiert und ist für den Anschluß von peripheren Rechnereinrichtungen, wie beispielsweise Diskettenlaufwerken, Festspeichereinrichtungen und weiteren Ausgabeeinrichtungen, wie beispielsweise Druckern, vorgesehen. Die Peripherieschnittstellen-Steuereinrichtung PS-ST enthält - in Figur 1 nicht detailliert dargestellt - für die physikalische Realisierung Schnittstelleneinrichtungen und für die prozedurale Realisierung wiederrum ein Mikroprozessorsystem. Mit Hilfe eines in diesem Mikroprozessorsystem geeigneten Programms werden die Prozeduren gemäß der ANSI-Empfehlung X3T9.2 realisiert. Für die Peripherieschnittstelle PS sind 50 Anschlußpunkte vorgesehen, wobei einem Schnittstellenanschluß jeweils zwei Anschlußpunkte zugeordnet sind. Bei asymmetrischer Auslegung der Peripherieschnittstelle PS ist jeweils ein Anschlußpunkt eines Daten- oder Steuer-Schnittstellenanschlusses mit Erdpotential verbunden. Der jeweils andere Anschlußpunkt dieser Schnittstellenanschlüsse ist über entsprechende Leitungen sowohl mit einem Anschlußpunkt einer Adaptereinrichtung ADE und parallel mit einem Anschlußpunkt einer ersten peripheren Rechnereinrichtung PE1 verbunden. Sowohl in der Adaptereinrichtung ADE als auch in der ersten peripheren Rechnereinrichtung PE1 sind jeweils Schnittstellensteuereinrichtungen vorhanden, mit deren Hilfe die physikalischen und prozeduralen Eigenschaften der ANSI-Schnittstelle X3T9.2 realisiert sind. Die Adaptereinrichtung ADE weist eine zusätzliche Peripherieschnittstelle PSZ auf. Diese zusätzliche Peripherieschnittstelle PSZ ist mit einer zweiten Peripherieeinrichtung PE2, beispielsweise ein Diskettenlaufwerk, verbunden. Die zusätzliche Peripherieschnittstelle PSZ entspricht hinsichtlich ihrer physikalischen und prozeduralen Eigenschaften der Peripherieschnittstelle PS.

In Figur 2 ist das Schaltbild einer erfindungsgemäßen Adaptereinrichtung ADE - siehe Figur 1 - dargestellt. Die Peripherieschnittstelle PS und die zusätzliche Peripherieschnittstelle PSZ sind jeweils durch strichpunktierte Linien angegeben. Sowohl für die Peripherieschnittstelle PS als auch die zusätzliche Peripherieschnittstelle PSZ sind jeweils die Daten- und die Steuer-Schnittstellenanschlüsse dargestellt. Die nicht gezeigten Potential-Schnittstellenanschlüsse werden gemäß der ANSI-Empfehlung X3T9.2 durchverbunden. Jeder Schnittstellenanschluß ist mit einem Spannungsteiler R versehen. Hierbei ist von jedem Schnittstellenanschluß ein 220 Ohm-Widerstand an eine positive Versorgungsspannung von 5 V und ein 330-Ohm-Widerstand an Erdpotential geführt. Peripherieschnittstellenseitig müssen die Spannungsteiler R lösbar - z. B. über Steckverbindungen - mit den Schnittstellenanschlüssen verbunden sein. Diese Maßnahme ist erforderlich, da mehrere periphere Rechnereinrichtungen PE oder Adaptereinrichtungen ADE parallel an die Peripherieschnittstelle PS anschließbar sind, jedoch nur in einer der Einrichtungen PE, ADE die Schnittstellenanschlüsse jeweils mit einem Spannungsteiler R gemäß dem Standard X3T9.2 zu versehen sind. Vorzugsweise wird die örtlich entfernteste periphere Rechnereinrichtung PE oder Adaptereinrichtung ADE mit den Spannungsteilern R ausgestattet und bei den weiteren näherliegenden Einrichtungen PE, ADE werden die Spannungsteiler R entfernt bzw. nicht angeordnet. Der "Select"- und der "Busy"-Schnittstellenanschluß SEL, BSY der Periperhieschnittstelle PS ist jeweils über eine bidirektionale Steuereinrichtung BST mit dem "Select"-bzw. "Busy"-Schnittstellenanschluß SEL, BSY der zusätzlichen Peripherieschnittstelle PSZ verbunden. Die bidirektionale Steuereinrichtung BST ist in Figur 3 detailliert dargestellt und erläutert. Der "Attention"-, der "Acknowledge"- und der "Reset"-Schnittstellenanschluß ATN, ACK, RST der Peripherieschnittstelle PS ist jeweils über eine in Richtung zusätzliche Peripherieschnittstelle PSZ wirkende Bustreibereinrichtung BT mit einem "Attention"-, einem "Acknowledge" und einem "Reset"-Schnittstellenanschluß ATN, ACK, RST der zusätzlichen Peripherieschnittstelle PSZ verbunden. Die acht Daten-Schnittstellenanschlüsse D1...D8 der Peripherieschnittstelle sind auf acht erste Anschlüsse A1 einer Leitungstreibereinrichtung LTE geführt. Acht zweite Anschlüsse A2 dieser Leitungstreibereinrichtung LTE sind mit den Daten-Schnittstellenanschlüssen D1...D8 der zusätzlichen Peripherieschnittstelle PSZ verbunden. Diese Leitungstreibereinrichtung LTE ist beispielsweise durch einen integrierten Schaltkreis 74ALS245 (Advanced Low Power Schottky-Technik) der Firma Texas Instruments realisiert. Dieser Schaltkreis enthält acht bidirektional steuerbare Leitungstreiber mit Anschlüssen vom Drei-Zustandstyp. Die Informationsübermittlungsrichtung wird durch Anlegen entsprechender Signale an einen Steuereingang G3 festgelegt. Die Anschlüsse dieser Leitungstreibereinrichtung LTE werden über einen Wirkeingang EN hochohmig oder wirksam - ist durch den Drei-Zustandstyp möglich - geschaltet.

Der "Datenparitybit"-Schnittstellenanschluß DP der Peripherieschnittstelle PS ist über eine in Figur 4 dargestellte und näher beschriebene "Datenparitybit"-Steuereinrichtung DPST an den "Datenparitybit"-Schnittstellenanschluß DP der zusätzlichen Peripherieschnittstelle PSZ geführt. Der Nachrichten-, der Ein-/Ausgangs-, der Daten-/Steuer- und der "Request"-Schnittstellenanschluß MSG, I/O, C/D, REQ der zusätzlichen Peripherieschnittstelle PSZ ist jeweils über eine in Richtung Peripherieschnittstelle PS wirkende Bustreibereinrichtung BT mit dem Nachrichten-, Ein-/Ausgangs-, Daten-/Steuer- und dem "Request"-Schnittstellenanschluß MSG, E/O, C/D, REQ der Peripherieschnittstelle PS verbunden. Der Ein-/Ausgangs-Schnittstellenanschluß I/O der zusätzlichen Peripherieschnittstelle PSZ ist zusätzlich mit dem Steuereingang G3 der Leitungstreibereinrichtung LTE und einem ersten Eingang E1 der "Datenparitybit"-Steuereinrichtung DPST verbunden. Durch Anlegen eines entsprechenden Signals an diesem Ein-/Ausgangs-Schnittstellenanschluß I/O wird festgelegt, in welche Richtung die Dateninformationen und die "Datenparity"-Information zu übermitteln sind.

Die Bustreibereinrichtungen BT sind beispielsweise durch integrierte Schaltkreise 74 S 125 (Schottky-Technik) der Firma Texas Instruments realisiert. Diese Bustreibereinrichtung BT weist einen Wirkeingang EN auf, mit dessen Hilfe jeweils der Ausgang der Bustreibereinrichtung BT wirksam oder hochohmig gesteuert werden kann. Hierfür sind die Bustreibereinrichtungen BT mit Drei-Zustandsausgängen ausgestattet. Die Wirkeingänge EN der an die Nachrichten-, Ein-/Ausgangs-, Daten-/Steuer- und Request-Schnittstellenanschlüsse MSG, I/O, C/D, REQ angeschlossenen Bustreibereinrichtungen BT sind jeweils mit dem Ausgang eines Verknüpfungsgliedes V verbunden. Diese Verknüpfungsglieder sind beispielsweise durch integrierte Schaltkreise 74 ALS 02 (Advanced Low Power Schottky-Technik), logisches ODER-Verknüpfungsglied der Firma Texas Instruments realisiert. Jeweils ein Eingang dieser Verknüpfungsglieder V ist jeweils mit dem zugehörigen Schnittstellenanschluß MSG, I/O, C/D, REQ verbunden. Die jeweils zweiten Eingänge dieser Verknüpfungsglieder V sind untereinander verbunden und auf den Ausgang A einer RS-Kippstufe KS geführt. Die RS-Kippstufe KS ist beispielsweise durch zwei in Flip-Flop-Schaltung angeordnete Verknüpfungsglieder N gebildet. Die Verknüpfungsglieder N sind beispielsweise durch integrierte Schaltkreise 74LS 132 (logische NAND-Gatter) realisiert. Der Ausgang der RS-Kippstufe KS ist zusätzlich auf die Wirkeingänge EN der in die restlichen Schnittstellenanschlüsse ATN, ACK, RST eingefügten Bustreibereinrichtungen BT und jeweils an einen Wirkeingang EN der Leitungstreibereinrichtung LTE, der bidirektionalen Steuereinrichtung BST und der "Datenparity"-Steuereinrichtung DPST angeschlossen. Ein erster Eingang E1 der RS-Kippstufe KS ist auf den Ausgang eines ersten NAND-Verknüpfungsgliedes N1 geführt. Ein erster Eingang E1 dieses ersten NAND-Verknüpfungsgliedes N1 ist mit dem "Busy"-Schnittstellenanschluß BSY der Peripherieschnittstelle PS verbunden. Ein zweiter Anschluß E2 des ersten NAND-Verküpfungsgliedes N1 ist mit einem zweiten Eingang E2 der RS-Kippstufe KS und mit einem Ausgang eines zweiten NAND-Verknüpfungsgliedes N2 verbunden. Die zusammengeschalteten Eingänge des zweiten NAND-Verknüpfungsgliedes N2 sind auf einen Steuer-Schnittstellenanschluß CTAN der zusätzlichen Pheripherischnittstelle PSZ geführt. Wird an diesen Steuer-Schnittstellenanschluß CTAN durch eine angeschlossene periphere Rechnereinrichtung PE Erdpotential geführt, so werden mit Hilfe der RS-Kippstufe KS alle unidirektional und bidirektional steuerbaren Einrichtungen wirksam geschaltet, sofern die Peripherieschnittstelle PS nicht bereits durch eine andere periphere Rechnereinrichtung PE oder durch das Rechnersystem RE - wird durch entsprechendes Potential an dem "Busy"-Schnittstellenanschluß BSY angezeigt - bereits für eine Informationsübermittlung belegt ist.

Die Wirkrichtung der Leitungstreibereinrichtung LTE und der Datenparity-Steuereinrichtung DPST wird durch entsprechende Signale am Ein-/Ausgangs-Schnittstellenanschluß I/O eingestellt.

Figur 3 zeigt das Schaltbild der bidirektionalen Steuereinrichtung BST. In die Schnittstellenanschlüsse SA sind parallel jeweils zwei seriell angeordnete Bustreibereinrichtungen BT bidirektional eingefügt, wobei der Ausgang der zweiten der seriell geschalteten Bustreibereinrichtungen BT jeweils mit dem Eingang der anderen ersten der seriell geschalteten Bustreibereinrichtungen BT verbunden ist. Der Ausgang jeweils der ersten der seriell geschalteten Bustreibereinrichtungen BT ist jeweils auf den Wirkeingang EN der parallel angeordneten ersten Bustreibereinrichtung BT geführt. Hierdurch wird erreicht, daß nur jeweils eine Bustreibereinrichtung BT aktiv geschaltet sein kann. Von den Ausgängen der ersten der seriell geschalteten Bustreibereinrichtungen BT ist jeweils ein Arbeitswiderstand RA zur positiven Versorgungsspannung +U geführt. Die jeweils zweiten der seriell geschalteten Bustreibereinrichtungen BT werden über einen Wirkeingang EN und jeweils über ein Verknüpfungsglied V wirksam geschaltet. Hierbei ist jeweils ein Eingang der Verknüpfungsglieder V an den Wirkeingang EN der bidirektionalen Steuereinrichtung BST und der jeweils andere Eingang mit dem Eingang der wirksam zu schaltenden Bustreibereinrichtung BT verbunden. Die Bustreibereinrichtungen BT sind wiederum beispielsweise durch integrierte Schaltkreise 74 S 125 der Firma Texas Instruments und die Verknüpfungsglieder durch integrierte Schaltkreise 74 ALS 02 realisiert.

In Figur 4 ist das Schaltbild der "Datenparitybit"-Steuereinrichtung DPST dargestellt. Hierbei sind zwischen die "Datenparitybit"-Schnittstellenanschlüsse DP bidirektional zwei Bustreibereinrichtungen BT eingefügt. Die Wirkeingänge EN der Bustreibereinrichtungen BT sowie deren Wirkrichtung werden durch Anlegen entsprechender Signale an einen ersten und zweiten Eingang E1, E2 mit Hilfe dreier NAND-Verknüpfungsglieder N gesteuert. Durch Anlegen entsprechender Signale an den ersten Eingang E1 wird die Wirkrichtung festgelegt. Durch die an den zweiten Eingang E2 der "Datenparitybit"-Steuereinrichtung DPST geführten Signale der RS-Kippstufe KS - siehe Figur 2 - werden unabhängig von der aktuell eingestellten Wirkrichtung beide Bustreibereinrichtungen BT wirksam bzw. hochohmig geschaltet. Die Bustreibereinrichtungen BT sind beispielsweise ebenfalls durch integrierte Schaltkreise 74 S 125 und die NAND-Verknüpfungsglieder N durch integrierte Schaltkreise der Standardserie 74 ALS 00 von Texas Instruments realisiert. Für die Bus- und Leitungstreibereinrichtungen BT, LTE sind, wie beispielhaft angegeben, integrierte Schaltkreise auszuwählen, die entsprechend dem Standard X 3T9.2 bei einer logischen "O" einen Ausgangsstrom von mindestens 48 mA liefern können.

## Patentansprüche

1. Anordnung zum störungsfreien Anschluß von peripheren Rechnereinrichtungen (PE) an eine zumindest von einem Rechnersystem (RE) gesteuerte mehrpolige Peripherieschnittstelle (PS), an die parallel Rechnersysteme (RE) und periphere Rechnereinrichtungen (PE) anschließbar sind und die durch bidirektional wirkende Daten-Schnittstellenanschlüsse, durch bidirektional und unidirektional wirkende und durch die Rechnersysteme (RE) und/oder die peripheren Rechnereinrichtungen (PE) gesteuerte Steuer-Schnittstellenanschlüsse sowie durch Potential-Schnittstellenanschlüsse gebildet ist, wobei die Daten- und Steuerschnittstellenanschlüsse bei angeschlossenen, peripheren Rechnereinrichtungen rechnersystemseitig und peripherieeinrichtungsseitig jeweils mit definierten Abschlußwiderständen (R) versehen sind und die asymmetrischen, digitalen über die Peripherieschnittstelle (PE) bzw. über auf eine vorgegebene maximale Länge begrenzte Schittstellenkabel zu übermittelnden Daten- und Steuersignale jeweils innerhalb vorgegebener Pegelbereiche auszusenden sind bzw. innerhalb vorgegebener Pegelbereiche auswertbar empfangen werden können,
**dadurch gekennzeichnet**,
daß eine Adaptereinrichtung (ADE) zwischen die Rechnersysteme (RE) und die peripheren Rechnereinrichtungen (PE) einfügbar ist, daß in der Adaptereinrichtung (ADE) eine eine periphere Rechnereinrichtung (PE) repräsentierende Peripherieschnittstelle (PS) und eine ein Rechnersystem (RE) repräsentierende zusätzliche Peripherieschnittstelle (PSZ) angeordnet ist, daß die Daten- und Steuer-Schnittstellenanschlüsse in der Adaperteinrichtung (ADE) peripherieschnittstellenseitig mit vorgegebenen lösbaren Abschlußwiderständen (R) versehbar und zusätzliche - peripherieschnittstellenseitig mit vorgegebenen Abschlußwiderständen (R) versehen sind, daß die bidirektional wirkenden Daten- und Steuer-Schnittstellenanschlüsse der in der Adaptereinrichtung (ADE) angeordneten Peripherieschnittstellen (PS, PSZ) über bidirektional steuerbare, wirksam schaltbare und signalregenerierende erste Schaltmittel (BST, LTE DPST) verbunden sind, daß die unidirektional wirkenden Steuer-Schnittstellenanschlüsse (BSY, ATNACK, RST, MSG, I/O, C/D, REQ) der beiden Peripherieschnittstellen (PS, PSZ) über unidirektional steuerbare, wirksam schaltbare und signalregenerierende zweite Schaltmittel (BT) miteinander verbunden sind und daß die ersten und zweiten Schaltmittel (BST, LTE, DPST, BT) über einen in der zusätzlichen Peripherieschnittstelle (PSZ) angeordneten Steuer-Schnittstellenanschluß (CTAN) mit Hilfe dritter Schaltmittel (KS) und logischer Verknüpfungsglieder (V, N) durch eine an der zusätzlichen Peripherieschnittstelle (PSZ) aktiv angeschlossene periphere Rechnereinrichtung (PE) dann wirksam schaltbar sind, sofern über die Peripherieschnittstelle (PS) durch eine der parallel angeordneten peripheren Rechnereinrichtungen (PE) oder Rechnersysteme (RE) aktuell keine Informationen übermittelt werden.

2. Anorndung nach Anspruch 1,
**dadurch gekennzeichnet**,
daß die ersten Schaltmittel (BST, LTE, DPSC) durch bidirektional steuerbare, wirksam schaltbare und signalregenerierende integrierte Leitungstreiber-Standardschaltkreise und/oder bidirektional geschaltete, unidirektional wirkende sowie wirksam schaltbare und signalregenerierende integrierte Bustreiber-Standardschaltkreise (BST, DST) und logische Verknüpfungsglieder (V, N) realisiert sind.

3. Anorndung nach mindestens einem der vorhergehenden Ansprüche,
**dadurch gekennzeichnet**,
daß die zweiten Schaltmittel (BT) durch unidirektional wirkende wirksam schaltbare und signalregenerierende integierte Bustreiber-Standardschaltkreise realisiert sind.

4. Anordnung nach mindestens einem der vorhergehenden Ansprüche, **dadurch gekennzeichnet**,
daß das dritte Schaltmittel (KS) durch eine RS-Kippstufe (KS) realisiert ist.

## Claims

1. Arrangement for the interference-free connection of peripheral computer devices (PE) to a multipole peripheral interface (PS), which is controlled by at least one computer system (RE), allows computer systems (RE) and peripheral computer devices (PE) to be connected to it in parallel and is formed by bidirectionally acting data interface connections, by bidirectionally and unidirectionally acting control interface connections controlled by the computer systems (RE) and/or the peripheral computer devices (PE) and also formed by potential interface connections, the data and control interface connections with connected peripheral computer devices being provided respectively on the computer system side and peripheral device side with defined terminating resistors (R), and the asymmetrical, digital data and control signals, to be transmitted via the peripheral interface (PE) or via interface cables limited to a predetermined maximum length, respectively being transmittable within predetermined level ranges or able to be received, such that they can be evaluated, within predetermined level ranges, characterized in that an adaptor (ADE) can be inserted between the computer systems (RE) and the peripheral computer devices (PE), in that a peripheral interface (PS), representing a peripheral computer device (PE), and an additional peripheral interface (PSZ), representing a computer system (RE), is arranged in the adaptor (ADE), in that the data and control interface connections in the adaptor (ADE) can be provided on the peripheral interface side with predetermined detatchable terminating resistors (R) and are additionally provided on the peripheral interface side with predetermined terminating resistors (R), in that the bidirectionally acting data and control interface connections of the peripheral interfaces (PS, PSZ) arranged in the adaptor (ADE) are connected via bidirectionally controllable, activatable and signal-regenerating first switching means (BST, LTE, DPST), in that the unidirectionally acting- control interface connections (BSY, ATNACK, RST, MSG, I/O, C/D, REQ) of the two peripheral interfaces (PS, PSZ) are interconnected via unidirectionally controllable, activatable and signal-regenerating second switching means (BT) and in that the first and second switching means (BST, LTE, DPST, BT) are activatable via a control interface connection (CTAN), arranged in the additional peripheral interface (PSZ), with the aid of third switching means (KS) and logic combinational elements (V, N) by a peripheral computer device (PE), actively connected to the additional peripheral interface (PSZ), whenever no information is currently being transmitted via the peripheral interface (PS) by one of the parallel-arranged peripheral computer devices (PE) or computer systems (RE).

2. Arrangement according to Claim 1, characterized in that the first switching means (BST, LTE, DPSC) are realized by bidirectionally controllable, activatable and signal-regenerating integrated line-driver standard circuits and/or bidirectionally switched, unidirectionally acting and also activatable and signal-regenerating integrated bus-driver standard circuits (BST, DST) and logic combinational elements (V, N).

3. Arrangement according to at least one of the preceding claims, characterized in that the second switching means (BT) are realized by unidirectionally acting activatable and signal-regenerating integrated bus-driver standard circuits.

4. Arrangement according to at least one of the preceding claims, characterized in that the third switching means (KS) is realized by an RS flip-flop (KS).

## Revendications

1. Dispositif pour le raccordement sans parasitage, de dispositifs d'ordinateurs périphériques (PE) à une interface périphérique multipolaire (PS) commandée au moins par un système d'ordinateur (RE) et à laquelle peuvent être raccordés, en parallèle, des systèmes d'ordinateurs (RE) et des dispositifs d'ordinateurs périphériques (PE) et qui est formée par des bornes d'interface de transmission de données à action bidirectionnelle, par des bornes d'interface de commande agissant de façon bidirectionnelle et unidirectionnelle et commandées par des systèmes d'ordinateurs (RE) et/ou par les dispositifs d'ordinateurs périphériques (PE), ainsi que par des bornes d'interface de transmission de potentiel, et dans lequel les bornes d'interface de transmission de données et les bornes d'interface de commande sont pourvues respectivement de résistances de terminaison définies (R), du côté du système d'ordinateur et du côté des dispositifs périphériques, lorsque les dispositifs d'ordinateurs périphériques sont raccordés, et les signaux de données et les signaux de commande numériques dissymétriques, qui doivent être transmis par l'intermédiaire de l'interface périphérique (PE) et par l'intermédiaire d'un câble d'interface limité à une longueur maximale prédéterminée, sont émis respectivement à l'intérieur de gammes prédéterminées de niveaux ou peuvent être reçus de manière à pouvoir être évalués à l'intérieur de gammes prédéterminées de niveaux,
caractérisé par le fait
qu'un second dispositif d'adaptation (ADE) peut être raccordé entre les systèmes d'ordinateurs (RE) et les dispositifs d'ordinateurs périphériques (PE), que dans le dispositif d'adaptation (ADE) sont disposées une interface périphérique (PS) représentant un dispositif d'ordinateur périphérique (PE) et une interface périphérique supplémentaire (SZ) représentant un système d'ordinateur (RE), que les bornes d'interface de transmission de données et de commande dans le dispositif d'adaptation (ADE) peuvent être équipées, du côté de l'interface périphérique, de résistances de terminaison amovibles prédéterminées (R) et que des bornes d'interface supplémentaires sont équipées, du côté des interfaces périphériques, de résistances de terminaison prédéterminées (R), que les bornes d'interface de transmission de données et de commande, qui agissent de façon bidirectionnelle, des interfaces périphériques (PS, PSZ) disposées dans le dispositif d'adaptation (ADE) sont reliées par l'intermédiaire de premiers moyens de commutation (BST, LTE, DPST) qui peuvent être commandés de façon bidirectionnelle, sont commutables de façon active et régénèrent les signaux, que les bornes d'interface de commande (BSY, ATNACK, RST, MSG, I/O, C/D, REQ), qui agissent de façon unidirectionnelle, des deux interfaces périphériques (PS, PSZ) sont reliées entre elles par l'intermédiaire de seconds moyens de commutation (BT) qui peuvent être commandés de façon unidirectionnelle, sont commutables de façon active et régénèrent les signaux et que les premiers et seconds moyens de commutation (BST, LTE, DPST, BT) sont commutables d'une manière active, par l'intermédiaire d'une borne d'interface de commande (CTAN) disposée dans l'interface périphérique supplémentaire (PSZ), à l'aide de troisièmes moyens de commutation (KS) et de circuits combinatoires logiques (V, N), par un dispositif d'ordinateur périphérique (PE) raccordé de façon active à l'interface périphérique supplémentaire (PSZ), dans la mesure où aucune information n'est actuellement transmise par l'intermédiaire de l'interface périphérique (PS) par l'un des dispositifs d'ordinateurs (PE) ou systèmes d'ordinateurs (RE) périphériques, disposés en parallèle.

2. Dispositif suivant la revendication 1, caractérisé par le fait que les premiers moyens de commutation (BST, LTE, DPSC) sont constitués par des circuits standards formant étages d'attaque intégrés, qui sont commandables de façon bidirectionnelle, sont commutables de façon active et régénèrent les signaux, ou par des circuits standards formant étages d'attaque de bus intégrés (BST, DST), qui sont branchés de façon bidirectionnelle, agissent de façon unidirectionnelle et sont commutables de façon efficace et régénèrent les signaux, et par des circuits combinatoires logiques (V,N).

3. Dispositif suivant au moins l'une des revendications précédentes, caractérisé par le fait que les deux moyens de commutation (BT) sont constitués par des circuits standards formant étage d'attaque de bus intégré, qui agissent de façon omnidirectionnelle, sont commutables de façon efficace et régénèrent les signaux.

4. Dispositif suivant au moins l'une des revendications précédentes, caractérisé par le fait que le troisième moyen de commutation (KS) est constitué par un étage à bascule de type RS (KS).
